# EUROPÄISCHE PATENTSCHRIFT

(11) **EP 0 453 459 B1**
(45) Veröffentlichungstag und Bekanntmachung des Hinweises auf die Patenterteilung: **14.04.1993**
(21) Anmeldenummer: 90901584.4
(22) Anmeldetag: 03.01.1990
(51) Int. Cl.: F16L 37/02, F16L 17/025

(54) **STECKVERBINDUNG FÜR DRUCKLEITUNGSANSCHLÜSSE**
SOCKET-TYPE UNION FOR HIGH-PRESSURE LINE CONNECTIONS
CONNECTEUR A DOUILLE POUR RACCORDS A PRESSION ELEVEE

(30) Priorität: 11.01.1989 DE 3900583
(43) Veröffentlichungstag der Anmeldung: 30.10.1991
(73) Patentinhaber: ZF FRIEDRICHSHAFEN Aktiengesellschaft, 88038 Friedrichshafen (DE)
(72) Erfinder: LEBER, Fritz, D-7990 Friedrichshafen 5 (DE)
(86) Internationale Anmeldenummer: EP9000005
(87) Internationale Veröffentlichungsnummer: WO9008287

(56) Entgegenhaltungen:
- DE-A- 2 600 153
- DE-A- 3 537 502
- US-A- 4 426 095

## Beschreibung

Die Erfindung betrifft Steckverbindungen für Druckleitungsanschlüsse nach dem Oberbegriff des Anspruchs 1, welcher ausgeht von der DE-A-35 37 502. Danach ist es bekannt, für gegenüber Gehäusen axial fest gehalterte Leitungsanschlüsse am Einsteck-Ende der Leitung Dichtringe in unprofilierten kreiszylindrischen Aufnahmebohrungen in Gehäusen axial zu befestigen und mit dem Rohr selbst vor dem Herausdrücken infolge des Mediumdruckes zu sichern. Diese Gestaltungsweise erspart zwar die insbesondere bei schweren Getriebegehäusen etc. aufwendige Einarbeitungen von Dichtungsringnuten in die Aufnahmebohrungen der Gehäuse, führt jedoch wegen der erforderlichen Eindrehungen in die Rohrwand zu einer komplizierteren Form der Einsteck-Enden, die sich auch wegen meist fehlender Wanddicken mit üblichen Normrohren nicht herstellen lassen würden.

Die Aufgabe der Erfindung wird hiervon ausgehend darin gesehen, eine Steckverbindung für Hochdruckleitungsanschlüsse zu schaffen, bei welcher weder die Aufnahmebohrung noch das Einsteck-Ende mit einer Ringnut, Bördelkante oder anderen Profilierungen etc. versehen werden müssen, und wobei eine problemlos separat einbaubare Dichtung dennoch genauso zuverlässig und präzise wie auch das eingesteckte Leitungsende selbst zwischen diesem und der Aufnahmebohrung bei höheren Drücken in Axialpositionen gehalten werden kann.

Die Lösung wird mit den kennzeichnenden Merkmalen des Anspruchs 1 dadurch erreicht, daß das Anschlußrohr im Bereich eines zylindrischen Einsteckendes mit profilfreier glatter Außenoberfläche vorgesehen ist, wobei der Dichtring durch eine in dessen Elastomerteil koaxial eingedichtete Blechhülse etwa gleichen mittleren Durchmessers gehäuseseitig verlängert ist, und dabei die Blechhülse am gehäuseseitigen Ende einen Innenkragen aufweist, der bei Endstellung des Anschlußrohres in der Aufnahmebohrung axial zwischen der Stirnseite des Anschlußrohres und dem Boden der Aufnahmebohrung in Achsrichtung arretiert ist.

Dies wird erreicht, indem vor dem Einstecken des Rohres über dessen Einsteck-Ende eine wahlweise mit vielen Umfangsrillen versehene Muffendichtung aus Elastomer-Material aufgeschoben wird, in welche eine koaxial angeordnete Blechhülse mit ein vulkanisiert wurde, die gehäuseseitig mit einem Innenkragen bzw. Ringbund abschließt, dessen Innendurchmesser etwa dem Innendurchmesser des Rohres entspricht. Dieser Innenkragen wird durch das Rohr in Einbaulage zwischen der Rohrstirnseite und dem Boden der Aufnahmebohrung axial fixiert, ohne daß es weiterer Befestigungen bedarf.

Der zylindrische Teil der einvulkanisierten Blechhülse kann z. B. durch Schlitze oder oberflächenvergrößernde Profilierungen besonders elastisch und verbindungsgünstig gestaltet werden, endet aber innerhalb des Elastomerteiles der Dichtung, so daß deren Außen-Ende homogen und nicht durch Einlagen bzw. Spalte etc. kerbempfindlich ist.

Die Anwendung dieser Steckverbindung ist unabhängig davon möglich, auf welche Weise das Rohr gegenüber dem Gehäuse axial fixiert ist. Dies kann z. B. allein dadurch erfolgen, daß das Rohr in einer Stützkonstruktion gehalten ist oder in dem zwei gegenüberliegende Rohr-Enden auf beiden Seiten in entsprechende Aufnahmeöffnungen eingesteckt und die Gehäuse zueinander unverschieblich sind.

Die Vorteile dieser Steckverbindung liegen offensichtlich zunächst in der Verringerung bzw. Vereinfachung von mechanischen Vorbereitungen der Gegenflächen, indem der Dichtring selbst mit einem unverlierbar angebrachten Halterungs- und Zentrierelement, nämlich dem Innenkragen, versehen ist. Darüber hinaus wächst die Abdichtungssicherheit, weil durch eine größere Zahl von Dichtkanten auf relativ gleicher Einstecktiefe und auch durch eine verringerte Beschädigungsgefahr im Vergleich zu einfachen O-Ringen noch ein günstigeres Abdichtungsergebnis bei kleinerer Wahrscheinlichkeit von Montagefehlern erreichbar ist.

Die Steckverbindung läßt sich selbstverständlich bei entsprechender Axialsicherung der zueinander in Verbindung zu bringenden Teile auch dann anwenden, wenn anstelle eines Gehäuses ein entsprechend aufgeweitetes Muffenrohr verwendet wird.

Anstelle eines durch einfaches Umbördeln hergestellten Innenkragens ist gleichwirkend auch dessen Herstellung durch stumpfes Anschweißen einer zylindrischen Blechhülse gegen eine entsprechende Ringscheibe, die in den Boden der Aufnahmebohrung paßt, eine alternative Fertigungs-Möglichkeit.

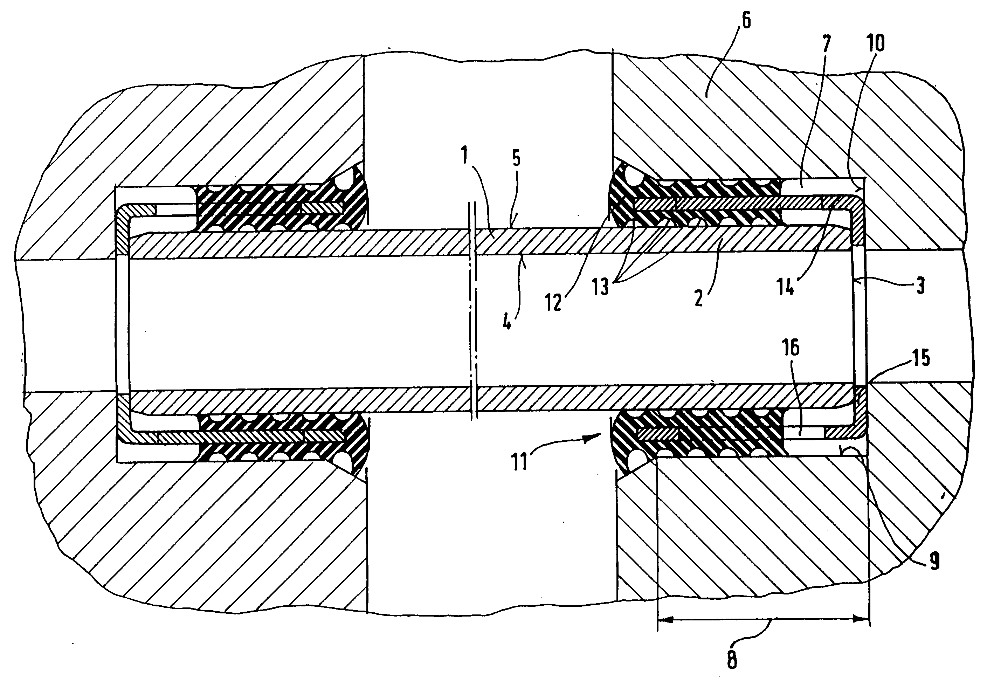

Ein Ausführungsbeispiel ist in der Zeichnung schematisch in Einbaulage mit zwei Gehäusen, die axial fixiert seien, dargestellt. Das unverdickte Anschlußrohr 1 hat auf seinem Einsteck-Ende 2 eine unprofilierte und ungeschwächte glatte Oberfläche, welche jedoch auf der Dichtungslänge kleine Umfangsriefen, z. B. vom Abschleifen, haben kann. Auf der Stirnseite 3 des Einsteck-Endes 2 können am Anschlußrohr 1 mit überall gleichem Innendurchmesser 4 und Außendurchmesser 5 leichte Abschrägungen bzw. Abrundungen dichtungsseitig vorgesehen sein. Auch am Gehäuse 6 kann die Aufnahmebohrung 7 entsprechend leicht aufgeweitet bzw. abgerundet sein, ehe der zylindrische Bereich 8 beginnt, welcher mit einem zur Innenwand 9 rechtwinklig stehenden Boden 10 endet. Der in der Regel vor dem Einschieben des Rohres 1 auf das Einsteck-Ende 2 aufgesteckte Dichtring 11 besteht aus dem Elastomerteil 12, in welches außen und innen mehrere Umfangsrillen 13 eingeformt sind sowie einer in das Elastomerteil 12 konzentrisch einvulkanisierten zylindrischen Blechhülse 14, die aber innerhalb des Elastomerteiles 12 endet und damit ein homogenes freies Ende des Elastomerteiles 12 auf der Seite des Rohres 1 sicherstellt.
Die Blechhülse 14 ist gehäuseseitig mit einem bis etwa zum Innendurchmesser des Rohres 1 herunterreichenden Innenkragen 15 versehen, welcher auch aus einer stumpf vor den zylindrischen Teil der Blechhülse 14 angeschweißten Ringscheibe bestehen kann. Das in den Elastomerteil 12 hineinreichende zylindrische Ende der Blechhülse 14 wird vorzugsweise mit Ausnehmungen 16 bzw. oberflächenvergrößernden Verformungen so gestaltet, daß es z. B. zum Entformen aus dem Vulkanisierwerkzeug etwas radial federn und sich mit dem Elastomermaterial zugfest verbinden kann.

Die axiale Länge des Dichtringes 11 mitsamt dem gehäuseseitig daraus etwas hervorstehenden unverkleideten Teil der Blechhülse 14 entspricht etwa der Tiefe der Aufnahmebohrung 7 und die Breite des Elastomerteiles 12 entspricht etwa der Tiefe des zylindrischen Bereiches 8 der Aufnahmebohrung 7. Die radiale Höhe des Dichtringes 11 muß im unmontierten Zustand um etwa die Tiefe der Umfangsrillen 13 größer sein, als der abzudichtende Ringspalt zwischen dem Außendurchmesser 5 des Rohres 1 und dem lichten Durchmesser der Innenwand 9 der Aufnahmebohrung 7.

### Bezugszeichen

1 Anschlußrohr
2 Einsteck-Ende von 1
3 Stirnseite von 1
4 Innendurchmesser von 1
5 Außendurchmesser von 1
6 Gehäuse
7 Aufnahmebohrung
8 Zylindrischer Bereich von 7
9 Innenwand von 7
10 Boden von 7
11 Dichtring
12 Elastomerteil von 11
13 Umfangsrillen auf 11
14 Blechhülse in 12
15 Innenkragen von 14
16 Ausnehmungen von 14

## Patentansprüche

1. Steckverbindung für Druckleitungsanschlüsse
- von Anschlußrohren (1) an mit zylindrischen Aufnahmebohrungen (7) versehenen Gehäusen (6),
- mit einem ein Elastomerteil (12) aufweisenden und radial zwischen dem Anschlußrohr (1) und der Innenwand (9) der Aufnahmebohrung (7) angeordneten Dichtring (11),
- der entgegen dem in demselben herrschenden Mediumdruck vom Anschlußrohr (1) in bleibender Axialposition gehalten wird, wobei ein zylindrischer Bereich (8) der Aufnahmebohrung (7) gegenüber der von ihm umschlossenen axialen Breite des Elastomerteiles (12) ein größere Tiefe aufweist,
dadurch **gekennzeichnet,**
- daß das Anschlußrohr (1) im Bereich eines zylindrischen Einsteck-Endes (2) mit profilfreier glatter Außenoberfläche vorgesehen ist,
- daß der Dichtring (11) durch eine in dessen Elastomerteil (12) koaxial eingedichtete Blechhülse (14) etwa gleichen mittleren Durchmessers gehäuseseitig verlängert ist,
- und daß die Blechhülse (14) am gehäuseseitigen Ende einen Innenkragen (15) aufweist, welcher bei Endstellung des Rohres (1) in der Aufnahmebohrung (7) axial zwischen der Stirnseite (3) des Rohres (1) und dem Boden (10) der Aufnahmebohrung (7) in Achsrichtung arretiert ist.

2. Steckverbindung nach Anspruch 1, dadurch **gekennzeichnet**, daß die Breite des Elastomerteiles (12) etwa der Tiefe des zylindrischen Bereiches (8) der Aufnahmebohrung (7) entspricht.

3. Steckverbindung nach Anspruch 1, dadurch **gekennzeichnet**, daß der Elastomerteil (12) aus einem mit zahlreichen inneren und äußeren Umfangsrillen (13) versehenen endlosen Dichtungsband besteht, das ausreichende Wandstärke für eine lecksichere Einvulkanisation bzw. Einklebung der Blechhülse (14) in einen zu deren Einlegen lediglich gehäuseseitig offen gehaltenen Spalt aufweist.

4. Steckverbindung nach Anspruch 1, dadurch **gekennzeichnet**, daß die Blechhülse (14) mit Ausnehmungen (16) bzw. Oberflächenvergrößerungen versehen und radial begrenzt flexibel gestaltet ist.

5. Steckverbindung nach Anspruch 1, dadurch **gekennzeichnet**, daß der Innenkragen (15) einen lichten Durchmesser in der Größe des Innendurchmessers (4) des Rohres (1) aufweist.

6. Steckverbindung nach Anspruch 1, dadurch **gekennzeichnet**, daß der Innenkragen (15) Teil einer dem gehäuseseitigen Ende der Blechhülse (14) stumpf vorgeschweißten Ringscheibe ist, deren Außendurchmesser in den Durchmesser des Bodens (10) der Aufnahmebohrung (7) paßt.

## Claims

1. Plug-in connection for pressure pipe junctions
- of joining pipes (1) to housings (6) provided with cylindrical receiving bores (7),
- with a sealing ring (11) having an elastomer part (12) and disposed radially between the joining pipe (1) and the inner wall (9) of the receiving bore (7),
- which is held in a constant axial position by the joining pipe (1) against the medium pressure prevailing therein, a cylindrical region (8) of the receiving bore (7) having a depth greater than the axial width of the elastomer part (12) surrounded by said cylindrical region (8),
characterised
- in that the joining pipe (1) is provided in the region of a cylindrical plug-in end (2) with a profile-free, smooth outer surface,
- in that the sealing ring (11) is extended on the housing side by a sheet-metal sleeve (14) coaxially sealed into its elastomer part (12) and having approximately the same average diameter,
- and in that the sheet-metal sleeve (14) has on the housing-side end an inner collar (15), which, when the pipe (1) reaches the end position in the receiving bore (7), is locked axially between the end face (3) of the pipe (1) and the base (10) of the receiving bore (7) in the axial direction.

2. Plug-in connection according to claim 1, characterised in that the width of the elastomer part (12) approximately corresponds to the depth of the cylindrical region (8) of the receiving bore (7).

3. Plug-in connection according to claim 1, characterised in that the elastomer part (12) consists of an endless sealing tape provided with numerous inner and outer circumferential grooves (13) and has a sufficient wall thickness for the sheet-metal sleeve (14) to be vulcanised or glued in a leak-free manner into a gap held open for its insertion on the housing side only.

4. Plug-in connection according to claim 1, characterised in that the sheet-metal sleeve (14) is formed with recesses (16) or surface enlargements and has a degree of radial flexibility.

5. Plug-in connection according to claim 1, characterised in that the inner collar (15) has a clear diameter the size of the inner diameter (4) of the pipe (1).

6. Plug-in connection according to claim 1, characterised in that the inner collar (15) is part of an annular disc which is pre-welded in a flush manner to the housing-side end of the sheet-metal sleeve (14) and whose outer diameter fits into the diameter of the base (10) of the receiving bore (7).

## Revendications

1. Liaison par enfoncement, pour des raccordements de conduite sous pression, de tubes de raccordement (1) à des carters (6) pourvus de perçages de logement (7) cylindriques, avec un anneau d'étanchéité (11) qui présente une partie en élastomère (12), qui est agencé radialement entre le tube de raccordement (1) et la paroi interne (9) du perçage de logement (7) et qui est maintenu en position axiale fixe par le tube de raccordement (1) à l'encontre de la pression du milieu qui y règne, une zone cylindrique (8) du perçage de logement (7) présentant une profondeur supérieure à la largeur axiale, de la partie en élastomère (12), qui est entourée par la zone,
caractérisée en ce que
- le tube de raccordement (1) est prévu avec une surface externe non profilée unie, dans la zone d'une extrémité cylindrique à enfoncer (2),
- l'anneau d'étanchéité (11) est prolongé du côté du carter par un manchon en tôle (14) qui est noyé de façon étanche coaxialement dans la partie en élastomère (12) de l'anneau et qui a un diamètre moyen approximativement égal,
- et le manchon en tôle (14) présente à son extrémité du côté du carter un collet interne (15) qui, pour la position extrême du tube (1) dans le perçage de logement (7), est bloqué, en direction axiale, axialement entre la face frontale (3) du tube (1) et le fond (10) du perçage de logement (7).

2. Liaison par enfoncement suivant la revendication 1, caractérisée en ce que la largeur de la partie en élastomère (12) correspond approximativement à la profondeur de la zone cylindrique (8) du perçage de logement (7).

3. Liaison par enfoncement suivant la revendication 1, caractérisée en ce que la partie en élastomère (12) est constituée d'une bande d'étanchéité sans fin qui est pourvue de nombreuses nervures périphériques internes et externes (13) et qui présente une épaisseur de paroi suffisante pour une vulcanisation ou un collage sans fuite du manchon en tôle (14) dans un interstice purement maintenu ouvert du côté du carter pour l'introduction du manchon.

4. Liaison par enfoncement suivant la revendication 1, caractérisée en ce que le manchon en tôle (14) est pourvu d'évidements (16) ou bien d'agrandissements de surface et est façonné d'une façon flexible limitée radialement.

5. Liaison par enfoncement suivant la revendication 1, caractérisée en ce que le collet interne (15) présente un diamètre libre de la grandeur du diamètre interne (4) du tube (1).

6. Liaison par enfoncement suivant la revendication 1, caractérisée en ce que le collet interne (15) fait partie d'un disque annulaire gui est soudé en bout à l'avance à l'extrémité, du côté du carter, du manchon en tôle (14) et dont le diamètre externe est ajusté dans le diamètre du fond (10) du perçage de logement (7).
